# EUROPEAN PATENT APPLICATION

(11) **EP 3 388 148 A1**
(43) Date of publication of application: **17.10.2018**
(21) Application number: 16872465.6
(22) Date of filing: 07.12.2016
(51) Int. Cl.: B01J 37/12, B01J 21/06, B01J 35/00, C25D 11/02

(54) **METHOD FOR OBTAINING A SHEET OF TITANIUM WITH PHOTOCATALYTIC ACTIVITY**

(30) Priority: 11.12.2015 ES 201531793
(71) Applicant: Universidad Politécnica de Madrid, 28040 Madrid (ES)
(72) Inventor: GONZÁLEZ MORÁN, Irene, 28040 Madrid (ES); DEL RÍO MERINO, Mercedes, 28040 Madrid (ES); FERNÁNDEZ MARTÍNEZ, Francisco, 28040 Madrid (ES)
(74) Representative: Ungria López, Javier
(86) International application number: PCT/ES2016/070864
(87) International publication number: WO 2017/098070

(57) **Abstract**

The invention relates to a method for obtaining a sheet of titanium comprising a layer of titanium dioxide in the anatase phase on the surface thereof and exhibiting a photocatalytic activity. The invention also relates to the sheet thus obtained and to a building material containing same. The sheet of titanium according to the present invention and the building materials produced therefrom provide a double aesthetic and decontaminating functionality.

## Description

### TECHNICAL FIELD OF THE INVENTION

The present invention belongs to the field of functional building materials. More specifically, the invention refers to a method for obtaining a sheet of titanium comprising a layer of titanium dioxide in the anatase phase on the surface thereof and exhibiting photocatalytic activity, as well as to the sheet thus obtained and to a building material containing same. The sheet of titanium according to the present invention and the building materials produced therefrom provide a dual functionality: aesthetics and decontaminating of organic and inorganic substances in gaseous and liquid media. The aesthetic function is provided by the colour obtained on the anodized surface of the sheet. The decontaminating action occurs thanks to the photocatalytic activity of titanium dioxide in anatase form that is present in the surface of the sheets.

### BACKGROUND OF THE INVENTION

Titanium and its alloys are materials whose employment is expanding in the field of architecture since the late twentieth century. Titanium is, currently, beginning to replace other less resistant, durable, aesthetic or with a lower thermal resistance materials or metals, such as aluminium. Therefore, it is a material whose use is booming.

Titanium and its alloys are normally used for the coatings of building facades in the form of plates or sheets to provide a determined aesthetic impression.

On the other hand, a current problem, especially in urban places, is the environmental pollution against which there are not many active solutions.

Photocatalysis is a well-known process used for the decontamination of gaseous and liquid effluents consisting of chemical catalysis promoted by light. Therefore, photocatalysis involves the combination of photochemistry and catalysis. Both light and catalyst are necessary to reach or accelerate the chemical reaction. Thus, photocatalysis can be defined as the acceleration of a photoreaction with a catalyst. During the photocatalytic process, both oxidation and reduction reactions occur, so that not only photocatalysis can be applied to the oxidation of organic compounds, but also to the reduction of inorganic ions and to the reduction of other organic compounds. In photocatalytic processes that occur outdoors, in open environments, light energy comes normally from the sun, so that the use of photocatalysis as a decontaminating strategy is a cheap option since it does not need energy sources apart from sunlight.

One of the most used catalysts in the framework of photocatalysis is titanium dioxide. It is commonly used for photocatalytic processes aimed at reducing environmental pollution and liquid effluents. It is known that titanium dioxide must be in anatase crystalline form in order to achieve a significant and effective photocatalytic and decontaminating effect. Titanium dioxide in other crystalline forms can reduce its photocatalytic activity and even be ineffective in its decontaminating action.

An approach which benefits the decontamination, especially in urban environments, is the development of procedures that allow the incorporation of particles of elements with photocatalytic activity on the surface of building materials so that the own building materials have a decontaminating effect.

For instance, patent US 7449245 describes substrates with a layer of TiO₂ and it also describes that they can be applied in the cladding of facades.

The authors of the present invention have developed a method for obtaining a titanium sheet which has a layer of titanium dioxide in the anatase phase on its surface and which possesses a marked photocatalytic and decontaminating activity, as it will be shown, The described method is based on the electrolytic oxidation of the surface of the titanium sheet under certain conditions and followed preferably by a heat treatment. The obtained titanium sheets have aesthetic characteristics due to the range of colours obtained after the process, and photocatalytic properties due to the produced titanium dioxide on their surface. The sheets retain a titanium core inside, so that their mechanical properties do not vary as much as they are still applicable as is the titanium itself in architecture and facade cladding.

Oxidation and anodization processes of metal surfaces are known in the state of the art, such as, for example, those described in the patents US3663379, US8821831 or USH1207, however, none of the described procedures describes the oxidation in two steps of the method described here and they also do not describe the obtaining of titanium dioxide in the anatase phase, which is what promotes the powerful photocatalytic activity shown by the sheets of the invention.

### BRIEF DESCRIPTION OF THE FIGURES

**Figure 1****:** Reflectance curve of the approximate coloration obtained on the sheet of metallic titanium with the titanium cathode and after the heat treatment.
**Figure 2****:** Reflectance curve of the approximate coloration obtained on the sheet of metallic titanium with the carbon cathode and after the heat treatment.
**Figure 3****:** Reflectance curve of the approximate coloration obtained on the sheet of metallic titanium with the platinum cathode and after the heat treatment.
**Figure 4****:** Reflectance curve of the approximate coloration obtained on the sheet of metallic titanium with the platinum cathode and without heat treatment.
**Figure 5****:** X-ray diffraction diagram showing the formation of anatase phase on the surface of the sheet of metallic titanium with each of the methods. It can be seen that the amount and particle size for each method / cathode is different.

### DETAILED DESCRIPTION OF THE INVENTION

The first aim of the present invention is a method for obtaining a sheet of titanium having a layer of titanium dioxide in the anatase phase on the surface thereof and having photocatalytic activity, comprising:
a) Electrolytic oxidation of a sheet of titanium with purity higher than 99% with a titanium, carbon or platinum cathode at a voltage between 60 V and 200 V and a current of between 10 mA/m²-15 mA/m².
b) An optional heat treatment at a temperature between 500°C and 950°C for a minimum time of 120 min.

The method according to the present invention makes it possible to produce a sheet with a surface layer having titanium dioxide in the anatase form. The appearance of a layer of titanium dioxide in the form of anatase is what provides the important photocatalytic activity and therefore the decontaminating function of the sheet.

Therefore, obtaining the surface layer of titanium dioxide in the sheet is one of the essential elements of the present invention. The appearance of that surface layer in anatase form is due to the parameters with which the electrolytic oxidation is carried out as well as to the thermal treatment which works to promote the appearance of anatase in the titanium dioxide layer.

Regarding the essential parameters to carry out the electrolytic oxidation, the most relevant are the cathodes used as well as the conditions of the electrolysis itself, that is, the applied voltage and current.

Concerning the used cathodes, they must be of titanium, carbon or platinum of cylindrical form normally. The use of these cathodes in the electrolysis permits to obtain the desired superficial layer of titanium dioxide and, at the same time, it permits to obtain very similar tones (gold-rose).

The electrolysis must be carried out at a voltage of between 60 V and 200 V, but preferably between 60 V and 70 V and a current of 10 mA/m²-15 mA/m², but more preferably between 10 mA/m²-12 mA/m².

Another element to carry out electrolysis is the used electrolyte. The present invention contemplates the possibility of using any acid selected from sulfuric acid, nitric acid, hydrochloric acid, phosphoric acid and its acid salts such as sodium bisulfate and/or potassium or acid phosphates of sodium and/or potassium or mixtures thereof. Sulfuric acid is used preferably, since it is observed that it is the most effective electrolyte in the production of the titanium dioxide layer.

The electrolysis must be carried out for a time that can vary between 1 and 100 minutes from the moment that the maximum voltage is reached. The most appropriate time may vary depending on the type of used electrode as well as whether the heat treatment step is carried out or not.

For example, a particular and preferred implementation of the method according to the invention comprises the electrolytic oxidation with a cathode of titanium, carbon or platinum for between 1 and 2 minutes once the maximum voltage is reached and, subsequently, the heat treatment is carried out. Sheets with a turquoise colour with a powerful catalytic activity are obtained by this embodiment.

Another particular embodiment of the method according to the invention comprises the electrolytic oxidation with a cathode of titanium for between 80 and 100 minutes once the maximum voltage is reached and it does not imply the development of the heat treatment. Sheets with a similar colour as the previous embodiment are obtained by this method.

The thermal treatment step of the method, although optional, is a highly recommendable step since it promotes the appearance of the crystalline anatase form in the produced titanium oxide. Therefore, the heat treatment allows the achievement of titanium sheets with a photocatalytic activity much higher than if the heat treatment is not carried out.

As mentioned before, the heat treatment is carried out in an oven at a temperature between 500 °C and 950 °C, preferably between 500 °C and 550 °C and for a minimum time of 120 minutes.

An additional step of cleaning the surface of the sheet with an organic solvent, for example acetone, can be carried out between the electrolytic oxidation stage and the thermal treatment. The purpose of this process is to eliminate impurities that can interfere in the formation of a homogeneous layer on the sheet of titanium in the anatase crystalline form of titanium dioxide that takes place during the thermal treatment.

Another aim of the present invention is the sheet of titanium comprising a layer of titanium dioxide in the anatase phase on the surface thereof, exhibiting photocatalytic activity and which is produced according to the described above method.

In addition, the presence of the surface layer of titanium dioxide provides a beautiful and interesting aesthetic effect, which varies with the angle of observation, due to the colour that the sheet presents, that is caused by the effect of light interference between the inner surface of titanium and the external surface of titanium dioxide.

The sheet according to the invention can therefore be considered a bifunctional material because it has aesthetic characteristics due to the range of obtained colours and, at the same time, photocatalytic properties due to the produced titanium dioxide in anatase form on its surface. The sheet keeps a titanium core inside, so that its mechanical properties hardly change. Therefore, its function as a cladding of facades and buildings is not affected in any way.

The surface of titanium dioxide in anatase form promotes that, in the presence of UV or solar light, the pollutants, usually organic ones, are oxidized to harmless substances such as CO₂ and H₂O. Thus, the ideal use of the product would be on facades or roofs that are exposed to sunlight. The sheet according to the present invention can be applied both for the decontamination of gaseous and liquid media since by contact with the pollutant the surface of the sheet acts as an adsorbent and by exposure to UV-Visible or solar radiation the adsorbed pollutants are oxidized and degraded to its simplest and harmless forms in the form of CO₂, H₂O, NO₃⁻. The following diagrams represent schematically the type of decontamination chemical reaction of organic matter or nitrogen oxides from the combustion of cars that occurs on the surface of the sheets according to the invention.

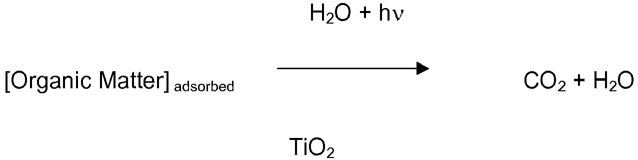

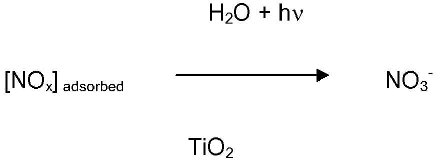

The photocatalytic activity of the sheet according to the invention has been proved to be very effective with the rhodamine B test in which this substance in aqueous solution is oxidized and the observable effect is the degradation of its coloration due to the photocatalyst effect. This permits to estimate the effectiveness and level of decontaminating activity of the sheet.

In a particular implementation of the invention, the sheet has a wavy shape in order to provide a higher contact surface which also allows increasing the decontaminating effect while providing a different aesthetic effect.

Another aim of the present invention is a building material comprising a titanium sheet according to the invention.

In its simplest implementation, the building material can be constituted by the sheet according to the invention itself, which can directly serve as a facade cladding element. However, the sheet according to the invention can be incorporated into different building elements in order to get a more sophisticated building material and even with a decorative or aesthetic purpose.

The last aim of the present invention is the use of the sheet or the construction material of the invention. On the one hand, that use comprises the decontamination of gaseous media or environments containing hydrogen sulphide, sulfur anhydrides, nitrogen oxides or volatile organic compounds (VOCs).

The sheet or the building material according to the invention is also useful for the decontamination of liquid media or environments and as a neutralizer of liquid currents.

Additionally, the sheet and the material according to the invention can be used for decorative purposes of facades and coatings due to the aesthetic effect produced by the different hues that can be obtained.

Below there is a series of examples to illustrate the invention but they do not intend to be limiting.

### EXAMPLES

### Example 1: Preparation of a sheet of titanium by electrolysis with titanium cathode and heat treatment

Firstly, the surface of the sheet of titanium was cleaned with propanone. The sheet of titanium was subjected to an electrolytic oxidation in which the electrolyte used was an aqueous solution of sulphuric acid 0.5% by weight. A potentiostat was used for the realization of this anodizing and it was carried out at a voltage of 60 V and with a current of 10 mA/m².

A titanium cylinder was used as the cathode and the maintenance time was one minute from the moment that the maximum voltage was reached. It should be added that the electrolyte was not centrifuged during the anodization nor was there a circular network surrounding the sample, unlike other anodization methods.

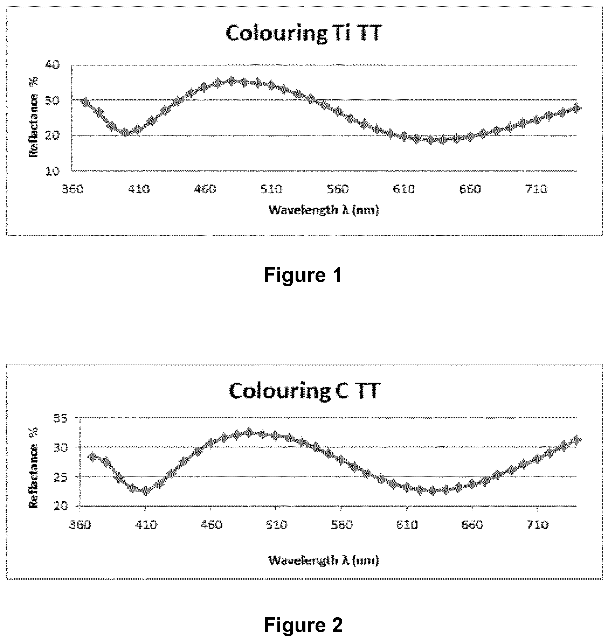

Subsequently, the product was again cleaned with propanone and introduced in an oven, previously heated, and the temperature of 500 °C was reached. The product was kept in the oven for a period of two hours. The obtained colour is shown in figure 1 with the measuring of the reflectance.

### Example 2: Preparation of a sheet of titanium by electrolysis with carbon cathode and heat treatment

Firstly, the surface of the sheet of titanium was cleaned with propanone. The sheet of titanium was subjected to an electrolytic oxidation in which the electrolyte used was an aqueous solution of sulphuric acid 0.5% by weight. A potentiostat was used for the realization of this anodizing and it was carried out at a voltage of 60 V and with a current of 10 mA/m².

A carbon cylinder was used as the cathode and the maintenance time was one minute from the moment that the maximum voltage was reached. It should be added that the electrolyte was not centrifuged during the anodization nor was there a circular network surrounding the sample, unlike other anodization methods.

Subsequently, the product was again cleaned with propanone and introduced in an oven, previously heated, and the temperature of 500 °C was reached. The product was kept in the oven for a period of two hours. The obtained colour is shown in figure 2 with the measuring of the reflectance.

### Example 3: Preparation of a sheet of titanium by electrolysis with platinum cathode and heat treatment

Firstly, the surface of the sheet of titanium was cleaned with propanone. The sheet of titanium was subjected to an electrolytic oxidation in which the electrolyte used was an aqueous solution of sulphuric acid 0.5% by weight. A potentiostat was used for the realization of this anodizing and it was carried out at a voltage of 60 V and with a current of 10 mA/m².

A platinum cylinder was used as the cathode and the maintenance time was one minute from the moment that the maximum voltage was reached. It should be added that the electrolyte was not centrifuged during the anodization nor was there a circular network surrounding the sample, unlike other anodization methods.

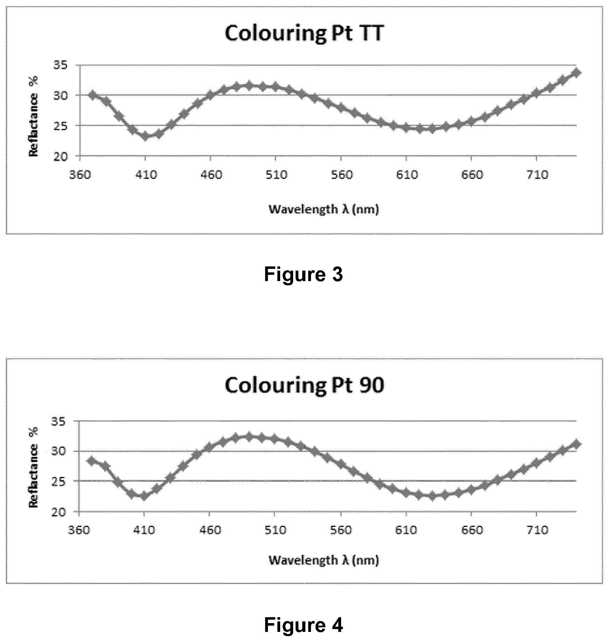

Subsequently, the product was again cleaned with propanone and introduced in an oven, previously heated, and the temperature of 500 °C was reached. The product was kept in the oven for a period of two hours. The obtained colour is shown in figure 3 with the measuring of the reflectance.

### Example 4: Preparation of a sheet of titanium by electrolysis with platinum cathode without heat treatment

This process was carried out analogously to that of Example 3 above, however in this case the maintenance time of the electrolysis process was ninety minutes from the moment that the maximum voltage was reached. Moreover, the heat treatment was not carried out as in the previous case. The obtained colour is shown in figure 4 with the measuring of the reflectance.

### Example 5: Analysis of the structure of the titanium dioxide surface layer of the different sheets

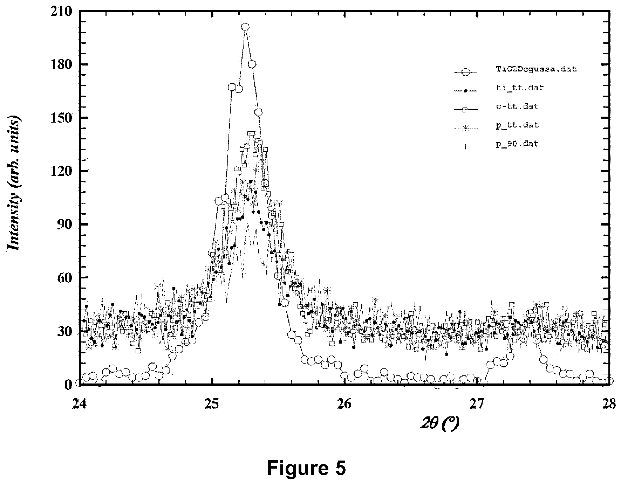

In order to know more about the composition and structure of these layers, X-ray tests were carried out with a diffractometer on the sheets obtained in examples 1, 2, 3 and 4. For this purpose, the Kα radiation from an X-ray lamp with a copper cathode is applied on the sample and the intensity of the diffracted radiation is measured with a detector. The measurement of intensity is made by varying the angle of incidence, which must vary in the same way as the angle of measurement varies with the detector. The simplified phenomenon would be a phenomenon of reflection, which occurring in the more internal crystalline layers it receives the name of diffraction. The detection of the position of the diffraction maxima as a function of the angle allows us, using the Bragg's law, to identify the crystalline phases. In this case, to differentiate the most common crystallographic phases, it is enough to record the angular range from 22.8° to 28.8° in 2 Theta, where the most intense peaks of the two crystalline phases, rutile and anatase, appear. The appearance of a peak at 25.3° would indicate that the formed crystalline phase is Anatase, whereas if a maximum would appear at the angular position of 27.3°, it would be the Rutile crystalline variety. Figure 5 below shows the diffraction diagram of the TiO₂ commercial catalyst from the Degussa Company, which shows the presence of the two crystalline phases, although the majority is in the Anatase form. On the other hand, in all the diffraction diagrams of the samples obtained by the methods described in the present patent, the peak appears only at 25.3°, indicating that only the Anatase crystalline phase has been formed and that the Rutile phase does not appear as impurity.

Figure 5 shows that the variety of titanium oxide that appears has the crystalline form of titanium dioxide in its anatase form, which is the most suitable for the operation of the photocatalysis and decontamination process, one of the functions of the material described in this invention.

### Example 6: Analysis of the photocatalytic activity of the different sheets

The effectiveness of the photocatalysis of the sheets of examples 1, 2, 3 and 4 was verified with a test consisting of placing the sample for 6 hours under a lamp whose spectrum is similar to natural light. The sample together with a solution of rhodamine B in water accentuates the degradation of this organic dye and thus determines the effectiveness of the synthesized material. The reductions in the concentration of rhodamine B for each sheet are shown in the following table;

**Table 1: Capability of oxidation by catalytic oxidation on Rhodamine B of the sheets produced with different cathodes. The samples are named with the symbol of each element or cathode used and those that have been subjected to a thermal treatment are indicated with TT. As a reference, it was simply used the aqueous Rhodamine B solution without containing a sample.**

| Specimen (N) | Reduction of the concentration of rhodamine (%) |
|---|---|
| Reference | 7 |
| C TT | 57 |
| Ti TT | 74 |
| Pt TT | 44 |
| Pt 90' | 43 |

As shown in the table, all the sheets according to the invention show a significant photocatalytic activity compared to the reference sample. However, the sheets obtained in examples 1 and 2 with titanium and carbon cathodes showed a higher activity than those obtained in examples 3 and 4 with the platinum cathodes.

## Claims

1. Method for obtaining a sheet of titanium having a layer of titanium dioxide in the anatase phase on the surface thereof and exhibiting photocatalytic activity, comprising-:
a) Electrolytic oxidation of a sheet of titanium with purity higher than 99% with a titanium, carbon or platinum cathode at a voltage between 60 V and 200 V and a current between 10mA/m²-15mA/m²;
b) An optional heat treatment at a temperature between 500°C and 950°C for a minimum time of 120 min.

2. Method according to claim 1, wherein the electrolytic oxidation comprises the use as electrolyte of an acid selected from the groups of acids consisting of: sulfuric, nitric, hydrochloric, perchloric and phosphoric acid or its acid salts such as sodium and/or potassium bisulfates, acid phosphates of sodium and/or potassium or mixtures thereof.

3. Method according to claim 2, wherein the electrolytic oxidation comprises the use of sulfuric acid as electrolyte.

4. Method according to the preceding claims, which comprises an additional step of cleaning the surface of the sheet with an organic solvent before the heat treatment.

5. Method wherein the cleaning of the sheet is carried out with acetone.

6. Method according to claim 1, wherein the electrolytic oxidation is carried out with a cathode of titanium, carbon or platinum for a period between 1 and 2 minutes from the moment that the maximum voltage is reached, and the subsequent heat treatment.

7. Method according to claim 1, wherein the electrolytic oxidation is carried out with a titanium cathode for a period between 80 and 100 minutes from the moment that the maximum voltage is reached, without the subsequent heat treatment.

8. A sheet of titanium comprising a layer of titanium dioxide in the anatase phase on the surface thereof and exhibiting photocatalytic activity and which is obtainable according to the method of any of claims 1-7.

9. A sheet of titanium according to claim 8, wherein the titanium dioxide layer provides an aesthetic coloured effect on it.

10. A sheet of titanium according to any of claims 8 or 9 wherein it has a wavy form.

11. A building material comprising a sheet of titanium according to any of claims 8 to 10.

12. Use of a sheet of titanium according to any of claims 8 to 10 or of a building material according to claim 11 for the decontamination of gaseous media or environments containing hydrogen sulphide, sulphurous anhydrides, nitrogen oxides or volatile organic compounds (VOCs).

13. Use of a sheet of titanium according to any of claims 8 to 10 or of a building material according to claim 11 for the decontamination of liquid media or environments and as neutralizer of liquid currents.

14. Use of a sheet of titanium according to any of claims 8 to 10 or of a building material according to claim 11 for decorative purpose of facades and claddings.
